# EUROPÄISCHE PATENTSCHRIFT

(11) **EP 0 976 520 B1**
(45) Veröffentlichungstag und Bekanntmachung des Hinweises auf die Patenterteilung: **18.02.2004**
(21) Anmeldenummer: 99111274.9
(22) Anmeldetag: 10.06.1999
(51) Int. Cl.: B29C 45/58, B29C 45/53

(54) **Kunststoffschmelze-Schusskolben**
Injection moulding plunger for molten plastics
Piston d'injection pour matière plastique fondue

(30) Priorität: 24.07.1998 DE 19833504
(43) Veröffentlichungstag der Anmeldung: 02.02.2000
(73) Patentinhaber: GNEUSS KUNSTSTOFFTECHNIK GmbH, D-32549 Bad Oeynhausen (DE)
(72) Erfinder: Gneuss, Detlef, 32549 Bad Oeynhausen (DE); Müller, Hans-Otto, 32549 Bad Oeynhausen (DE)
(74) Vertreter: Grosse, Wolf-Dietrich, Dipl.-Ing.

(56) Entgegenhaltungen:
- DE-B- 1 529 962
- DE-B- 1 554 801
- FR-A- 2 549 770
- US-A- 2 972 172
- US-A- 4 463 881
- US-A- 4 767 306

## Beschreibung

Die Erfindung betrifft einen Kunststoffschmelze-Schußkolben mit einem kraftbetriebenen, in einem mit einem Einlauf sowie mit einem Auslaß ausgestatteten Zylinder geführten Kolben, bei dem Ventilanordnungen eine Füllung des Zylinders beim Rückhub des Kolbens sowie eine Abgabe des Zylinderinhaltes während des Nutzhubes des Kolbens sichern.

Derartige Schußkolben sind z. B. durch die DE-A-1 554 801 bekannt geworden. Sie lassen sich für eine Anzahl von Anwendungen benutzen. Am bekanntesten ist die des Spritzens von Spritzlingen; Vielfach werden derartige Anordnungen auch für das Reinigen von Kunststofffiltern durch Rückspülen verwendet. Der bekannte Kunststoffschmelze-Schußkolben weist verwinkelte Ventilanordnungen auf, die Toträume bzw. Ecken darstellen, in denen Kunststoffschmelze unkontrollierbar lange verbleiben kann. Bei der hohen Temperatur der Schmelze bedeutet ein Verbleiben der Schmelze in den Ventilen die Gefahr unkontrollierter chemischer Änderungen des Kunststoffes. Bei dem bekannten Kunststoffschmelze-Schußkolben lassen sich über diese Ventile die Schußvolumina, die Fließgeschwindigkeit und auch der für den Schuß prägnante Druck wegen der Vielzahl der unterschiedlichen Antriebe für diese Ventile nur umständlich und aufwendig einstellen.

Die Erfindung hat die Aufgabe, einen der Gattung entsprechenden Kunststoffschmelze-Schußkolben zu schaffen, bei dem ungewollte Übertritte vom Einlauf zum Auslauf ebenso unterbunden werden wie Übertritte vom Auslauf zum Einlauf, wobei Toträume vermieden werden, in denen Kunststoff-Schmelzemengen verweilen können und bei dem das Schußvolumen, die Fließgeschwindigkeit sowie dessen Druck sowie Druckverlauf reproduzierbar einstellbar sind, wobei eine dem Rücklauf des Kolbens proportionale Füllung des Zylinders erreichbar sein soll.

Diese Aufgabe wird durch eine Vorrichtung mit den Merkmalen des Patentanspruchs 1 gelöst. Mittels des Differentialkolbens läßt sich der Auslaß nach Füllen bis zum Anfang des Schusses sperren, und während des Rückhubs kann der Zylinder Schmelze auf Wegen aufnehmen, die während des Nutzhubes absolut sperrbar sind.

Weitere Vorteile und Merkmale sind den Unteransprüchen entnehmbar.

Nachfolgend wird ein Ausführungsbeispiel der Erfindung erläutert. Dabei zeigen:
- Figur 1: im Längsschnitt und unterbrochen einen Kunststoffschmelze-Schußkolben am Ende seines Rückhubes im Zylinder,
- Figur 2: einen vergrößerten Axialschnitt des Schließringes nach Figur 1 und
- Figur 3: eine Frontalansicht des Schließringes nach Figur 2.

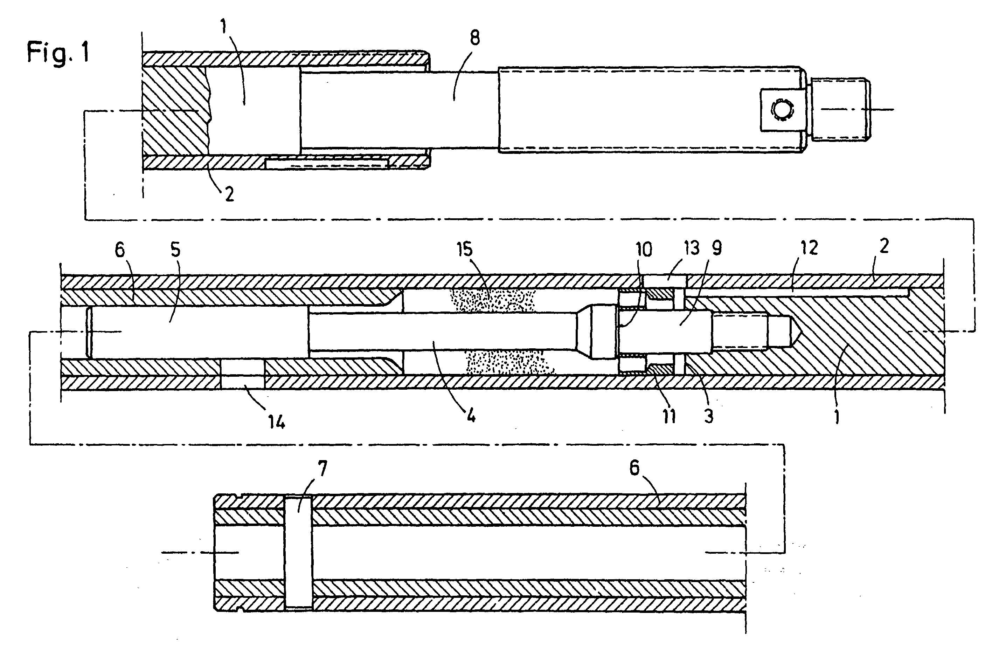

In der Figur 1 ist ein Längsschnitt einer Kolbenvorrichtung am Ende des Rückhubes des Kolbens 1 im Zylinder 2 gezeigt. Vor der Stirnfläche 3 des Kolbens 1 erstreckt sich ein Mitnehmerbolzen 4, der an seinem freien Ende einen Differentialkolben 5 trägt, der in einen Differentialzylinder 6 eingepaßt ist, welcher wiederum als Rohr ausgebildet und in einem Teil des Zylinders 2 eingesetzt und mit diesem durch einen Zylinderstift 7 verbunden ist. Rückseitig weist der Kolben 1 einen Schaft 8 auf, mittels dessen er mittels eines nicht dargestellten Hydraulikzylinders, einer Kurbel, eines Ritzeloder Schneckengetriebes oder dergl. antreibbar ist.

Der Mitnehmerbolzen 4 weist an die Stirnfläche 3 des Kolbens 1 angrenzend einen zylindrischen Abschnitt 9 auf, auf dem bis zum Flansch 10 axial verschiebbar ein Schließring 11 aufgesteckt ist.

Von der Stirnfläche 3 aus erstreckt sich entlang des Mantels des Kolbens 1 eine als Vorflutnut genutzte Nut 12. Durch den Zylinder 2 führt der Einlauf 13 und durch die Wandungen des Zylinders 2 sowie des Differenzialzylinders 6 ein Auslaß 14. Dieser Auslaß 14 wurde beim Rückhub der beiden Kolben 1 und 5 durch den Differenzialkolben 5 kurz vor Erreichen von dessen Extremstellung abgeschottet und damit sicher verschlossen.

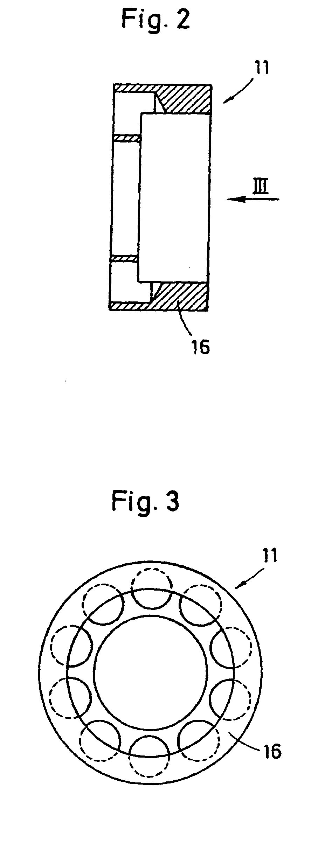

Wird nun der Nutzhub in der Figur 1 durch ein Verschieben der Kolben 1 und 5 nach links begonnen, so gibt nach kurzem Hub der Differentialkolben 5 den Auslaß 14 frei und öffnet ihn damit. Die zwischen dem Kolben 1 und 5 anstehende Kunststoffschmelze 15 wird gegen den Rand des Differenzialzylinders 6 geschoben und gerät durch die Verkleinerung des zur Verfügung stehenden Zylinderraumes unter Druck. Sie drängt dabei den in Figur 2 und 3 vergrößert gezeigten Schließring 11 auf den Zylinderabschnitt 9 gegen den Kolben 1 zurück. Hierbei deckt die Stirnfläche seiner Außenbuchse 16 die Stirnfläche 3 des Kolbens mindestens bis zur Tiefe der Nut 12 ab und schließt damit deren frontale Öffnung und damit jede Verbindung zum Einlauf 13. In der Folge des Nutzhubes wird durch den Kolben 1 Kunststoffschmelze 15 mit dem Druck ausgeschoben, der der auf den Schaft 8 ausgeübten Kraft entspricht, wobei auch die Stellgeschwindigkeit dem Schmelzefluß entspricht.

Wir nun der Rückhub eingeleitet, so gleiten Kolben 1 und Differentialkolben 5 nach rechts in ihre in Figur 1 dargestellte Lage zurück. Bereits zu Anfang der Bewegung ist der Druck der im Zylinder 2 vorhandenen Kunststoffschmelze 15 abgesunken, und unter Einfluß des Druckes der dem Einlauf 13 zugeführten Schmelze, die in die Nut 12 eindringt, wird der Schließring 11 von der Stirnfläche 3 des Kolbens 1 abgehoben, und während des weiteren Rücklaufs der Kolben 1 und 5 fließt ständig Schmelze vom Einlauf 13 über die Nut 12 durch den Schließring 11 in den Zylinderraum und füllt diesen kontinuierlich und vermeidet dadurch Druckschwankungen oder Extremwerte des Drucks sowohl im Zylinder 2 als auch am diesen speisenden Einlauf 13. Gegen Ende des Rückhubes sperrt, wie schon beschrieben, der Differentialkolben 5 den Auslaß 14, und auch der Einlauf 13 ist praktisch gesperrt, da es im nachgeordneten Zylinderraum keine Volumenänderung mehr gibt.

Da es keine Toträume oder abgebogenen Ecken mehr gibt, besteht auch keine Gefahr von Veränderungen der heißen Kunststoffschmelze.

Oft besteht der Wunsch, die Wiederauffüllung des Zylinderraums zu beeinflussen, um unterschiedliche Konsistenzen der Schmelze ausgleichen zu können. Relativ einfach läßt sich dies durch mehrere unterschiedliche Querschnitte aufweisende Nute 12 erreichen, von denen die jeweils gewünschte durch Drehen des Kolbens 1 unter den Einlauf 13 und damit in Wirkstellung gebracht wird.

### Bezugszeichenübersicht

- 1: Kolben
- 2: Zylinder
- 3: Stirnfläche
- 4: Mitnehmerbolzen
- 5: Differenzialkolben
- 6: Differenzialzylinder
- 7: Zylinderstift
- 8: Schaft
- 9: Zylindrischer Abschnitt
- 10: Flansch
- 11: Schließring
- 12: Nut
- 13: Einlauf
- 14: Auslaß
- 15: Kunststoffschmelze
- 16: Außenbuchse

## Patentansprüche

1. Kunststoffschmelze-Schußkolben mit einem kraftbetriebenen, in einem mit einem Einlauf (13) sowie mit einem Auslaß (14) ausgestatteten Zylinder (2) geführten Kolben (1), bei dem Ventilanordnungen eine Füllung des Zylinders (2) beim Rückhub des Kolbens (1) sowie eine Abgabe des Zylinderinhaltes während des Nutzhubes des Kolbens sichern,
**dadurch gekennzeichnet,**
**daß** der Kolben (1) mittels eines Mitnehmerbolzens (4) fest mit einem ihm vorgeordneten Differentialkolben (5) verbunden ist, der mindestens in seiner zurückgefahrenen Extremstellung den in dem zugeordneten Differentialzylinder (6) angeordneten Auslaß (14) überdeckt und schließt, und daß der Mantel des Kolbens (1) mindestens eine von seiner dem Differentialkolben (5) zugewandten Stirnfläche (3) ausgehende, unter dem Einlauf (13) vorgesehene Nut (12) einer die Länge des Kolbens (1) unterschreitenden Länge aufweist, und daß auf seinem zylindrischen, der Stirnfläche (3) vorgeordneten Abschnitt (9) des Mitnehmerbolzens (4) axial verschiebbar ein Schließring (11) angeordnet ist, der die Nut (12) gegen den Druckraum abzuschließen vermag.

2. Kunststoffschmelze-Schußkolben nach Anspruch 1,
**dadurch gekennzeichnet,**
**daß** die Länge der Nut (12) die des Nutzhubes überschreitet.

3. Kunststoffschmelze-Schußkolben nach Anspruch 1 oder 2,
**dadurch gekennzeichnet,**
**daß** entlang unterschiedlicher Mantellinien des Kolbens (1) unterschiedliche Querschnitte aufweisende Nuten (12) angeordnet sind, von denen durch Drehen des Kolbens (1) jeweils eine unter den Einlauf (13) in Wirkungstellung bringbar ist.

4. Kunststoffschmelze-Schußkolben nach einem der Ansprüche 1 bis 3,
**dadurch gekennzeichnet,**
**daß** der Schließring (11) mit einer Gleitbuchse auf dem zylindrischen Abschnitt (9) des Mitnehmerbolzens (4) geführt ist.

5. Kunststoffschmelze-Schußkolben nach einem der Ansprüche 1 bis 4,
**dadurch gekennzeichnet,**
**daß** der zylindrische Abschnitt (9) des Mitnehmerbolzens (4) eine Zentralöffnung des Schließrings (11) durchstößt.

6. Kunststoffschmelze-Schußkolben nach einem der Ansprüche 1 bis 5,
**dadurch gekennzeichnet,**
**daß** der zylindrische Abschnitt (9) durch einen Flansch (10) begrenzt ist.

7. Kunststoffschmelze-Schußkolben nach einem der Ansprüche 1 bis 6,
**dadurch gekennzeichnet,**
**daß** der Differentialzylinder (6) als separates Rohr in den Zylinder (2) eingeschoben und durch einen den Zylinder (2) und den Differentialzylinder (6) durchdringenden Bolzen dort gehalten ist.

## Claims

1. A shot piston for plastic melts having a power operated piston (1) which is carried within a cylinder (2) provided with an inlet (13) and with an outlet (14) and in which valve arrays ensure filling of the cylinder (2) during the return stroke of the piston (1) as well as discharge of the cylinder content during the work stroke of the piston,
**characterized in that**,
by means of a driver pin (4), the piston (1) is firmly connected to a differential piston (5) disposed in front thereof, said differential piston covering and closing the outlet (14) provided in the associated differential cylinder (6) at least in its extreme retracted position and that the piston (1) skirt is comprised of at least one groove (12) that takes departure from the end face (3) thereof which is turned toward the differential piston (5) and that is provided beneath the inlet (13), said groove having a length that is smaller than the length of the piston (1), and that, on the cylindrical portion (9) of the driver pin (4) which is disposed in front of the end face (3) there is provided an axially slidable locking ring (11) that is capable of blanking off the groove (12) from the compression space.

2. The shot piston for plastic melts according to claim 1,
**characterized in that**
the length of the groove (12) is greater than that of the work stroke.

3. The shot piston for plastic melts according to claim 1 or 2,
**characterized in that**,
along different surface lines of the piston (1), there are disposed grooves (12) of different cross-sections, a respective one of which is adapted to be brought into an operative position beneath the inlet (13) by rotating the piston (1).

4. The shot piston for plastic melts according to one of the claims 1 through 3,
**characterized in that**
the locking ring (11) is guided on the cylindrical portion (9) of the driver pin (4) by a guide bush.

5. The shot piston for plastic melts according to one of the claims 1 through 4,
**characterized in that**
the cylindrical portion (9) of the driver pin (4) extends through a central opening of the locking ring (11).

6. The shot piston for plastic melts according to one of the claims 1 through 5,
**characterized in that**
the cylindrical portion (9) is defined by a flange (10).

7. The shot piston for plastic melts according to one of the claims 1 through 6,
**characterized in that**
the differential cylinder (6) is introduced into the cylinder (2) in the form of a separate tube and is retained therein by a pin extending through the cylinder (2) and the differential cylinder (6).

## Revendications

1. Piston d'injection pour matières plastiques fondues avec un piston (1) mécanique guidé dans un cylindre (2) équipé d'une entrée (13) ainsi que d'une sortie (14) dans lequel des ensembles de vannes assurent le remplissage du cylindre (2) lors de la course de retour du piston (1) ainsi que le vidage du contenu du cylindre pendant la course utile du piston,
**caractérisé en ce que**
le piston (1 ) est solidarisé à un piston différentiel (5) disposé devant lui par l'intermédiaire d'un doigt d'entraînement (4), ledit piston différentiel couvrant et fermant la sortie (14) ménagée dans le cylindre différentiel associé (6) dans sa position remontée extrême au moins, et que la jupe du piston (1) comporte au moins une gorge (12) qui est ménagée en dessous de l'entrée (13), qui s'étend à partir de sa face d'extrémité (3) tournée vers le piston différentiel (5) et dont la longueur est inférieure à la longueur du piston (1), et que, sur la partie (9) cylindrique du doigt d'entraînement (4) disposée devant la face d'extrémité (3), est montée à coulissement axial une bague de fermeture (11) capable d'obturer la gorge (12) face à l'espace de pression.

2. Piston d'injection pour matières plastiques fondues selon la revendication 1,
**caractérisé en ce que**
la longueur de la gorge (12) est supérieure à celle de la course utile.

3. Piston d'injection pour matières plastiques fondues selon la revendication 1 ou 2,
**caractérisé en ce que**
des gorges (12) de différentes sections sont disposées le long de différentes génératrices du piston (1), lesdites gorges étant adaptées pour que, par la rotation du piston (1), chacune d'elles soit respectivement amenée dans une position active en dessous de l'entrée (13).

4. Piston d'injection pour matières plastiques fondues selon l'une quelconque des revendications 1 à 3,
**caractérisé en ce que**
la bague de fermeture (11) est guidée sur la partie cylindrique (9) du doigt d'entraînement (4) par un manchon coulissant.

5. Piston d'injection pour matières plastiques fondues selon l'une quelconque des revendications 1 à 4,
**caractérisé en ce que**
la partie cylindrique (9) du doigt d'entraînement (4) traverse un orifice central de la bague de fermeture (11).

6. Piston d'injection pour matières plastiques fondues selon l'une quelconque des revendications 1 à 5,
**caractérisé en ce que**
la partie cylindrique (9) est délimitée par une bride (10).

7. Piston d'injection pour matières plastiques fondues selon l'une quelconque des revendications 1 à 6,
**caractérisé en ce que**
le cylindre différentiel (6) est introduit dans le cylindre (2) sous forme de tube distinct et y est maintenu par un doigt traversant le cylindre (2) et le cylindre différentiel (6).
